# EUROPEAN PATENT SPECIFICATION

(11) **EP 2 934 999 B1**
(45) Date of publication and mention of the grant of the patent: **16.10.2019**
(21) Application number: 13818632.5
(22) Date of filing: 19.12.2013
(51) Int. Cl.: B64C 9/22, F16C 11/02, F16C 23/04, F16C 29/04

(54) **ACTUATION SYSTEM FOR A LIFT ASSISTING DEVICE AND LINED TRACK ROLLERS USED THEREIN**
BETÄTIGUNGSSYSTEM FÜR EINE AUFZUGSUNTERSTÜTZUNGSVORRICHTUNG UND DARIN VERWENDETE AUSGEKLEIDETE LAUFROLLEN DAFÜR
SYSTÈME D'ACTIONNEMENT POUR UN DISPOSITIF D'ASSISTANCE AU SOULÈVEMENT ET GALETS DE ROULEMENT ALIGNÉS UTILISÉS DANS CELUI-CI

(30) Priority: 19.12.2012 US 201213719541
(43) Date of publication of application: 28.10.2015
(73) Proprietor: Roller Bearing Company of America, Inc., Oxford, CT 06478 (US)
(72) Inventor: GYURICSKO, Frederick S., Torrington, Connecticut 06790 (US); PHOENIX, Jay, Bristol, Connecticut 06010 (US); FREDERICKSEN, Arnold, New Hartford, Connecticut 06057 (US); COWLES, JR., John H., Unionville, Connecticut 06085 (US)
(74) Representative: Bjerkéns Patentbyrå KB (Stockholm)
(86) International application number: PCT/US2013/076557
(87) International publication number: WO 2014/100411

(56) References cited:
- EP-A2- 2 067 696
- WO-A1-2012/129223
- US-A- 6 149 105
- US-A1- 2007 102 587

## Description

### BACKGROUND OF THE INVENTION

### FIELD OF THE INVENTION

This invention relates to roller bearing assemblies for use in critical applications and, more particularly, to lined track roller bearing assemblies used within an actuation system of a leading edge of a wing of an aircraft assembly.

### DESCRIPTION OF THE RELATED ART

It is well known to use bearings to reduce friction between moving parts of a mechanical assembly. Similarly, it is well known to use bearings that roll on a fixed track to extend a first component from a second component. One implementation of such a track style bearing is within a wing of an aircraft. For example, fixed wing aircraft typically include slats movably arranged along a leading edge of each wing and flaps movably arranged along a trailing edge of each wing. By selectively extending, retracting, and deflecting the slats and flaps aerodynamic flow conditions on a wing are influenced so as to increase lift generated by the wing during takeoff or decrease lift during landing. For example, during take-off the leading edge slats are moved forward to extend an effective chord length of the wing and improve lift. During flight, the leading edge slats and trailing edge flaps are placed in a retracted position to optimize aerodynamic conditions.

Generally speaking, leading edge slat designs employ a series of roller style bearings that guide fixed tracks to extend the leading edge slats in order to increase lift at slow speed for landing and takeoff. The tracks may have multiple configurations such as, for example, general I-beam and PI-beam shapes. Since the tracks themselves are typically not overly robust in their construction, multiple load conditions may be realized by the track roller bearings. Similarly, side load rollers or pins typically slide against the track to assist in centering the main rollers on the track. The wing also includes actuation systems for positioning the slats and flaps. Actuation systems include, for example, drive motors (e.g., hydraulic or electric drive motors), drive shafts and other bearings such as spherical bearings, bushings and linkage bearings that assist in deployment and retraction of the slats and flaps. As can be appreciated, aircraft wing designs are being continually developed as engineers seek to improve aircraft performance while increasing system capabilities. Newer designs are tending to increase the number of systems employed within a wing cross section. Accordingly, space within the wing cross section is at a premium. Therefore, it is desirable to improve performance characteristics of components (e.g., to reduce maintenance) within the wing while also minimizing space needed for such components.

Based on the foregoing, it is the general object of this invention to provide an improved bearing for use in crucial applications.

Documents EP2067696 and WO2012/129223, which show all the features of the preamble of claim 1, show actuation systems for deploying and retracting lift assisting devices known in the art.

### SUMMARY OF THE INVENTION

The present invention resides in one aspect in an actuation system for deploying and retracting a lift assisting device of a wing of an aircraft. The actuation system includes a track pivotally coupled to the lift assisting device, a shaft rotating in response to flight control signals to deploy or retract the lift assisting device, means for actuating the lift assisting device between a retracted position and a deployed position along an arcuate path, a plurality of track roller bearings and a plurality of side roller bearings. The roller bearings rotatably contact the track to guide the track along the arcuate path. In another embodiment, the track roller bearings are comprised of an outer race, an inner race and needle roller elements.

In one embodiment, the means for actuating includes a gear track coupled to the track and a pinion gear coupled to the shaft. The pinion gear has gear teeth that engage the gear track. When the shaft rotates in a first direction the pinion gear engages the gear track to move the lift assisting device from the retracted to the deployed position along the arcuate path. When the shaft rotates in a second direction the pinion gear engages the gear track to move the lift assisting device from the deployed position to the retracted position along the arcuate path. In another embodiment, the means for actuating includes an actuator arm coupled to the track and an actuator lever coupled to the shaft and to the actuator arm. When the shaft rotates in the first direction the actuator lever drives the actuator arm to move the track and the lift assisting device from the retracted to the deployed position along the arcuate path. When the shaft rotates in the second direction the actuator lever drives the actuator arm to move the track and the lift assisting device from the deployed position to the retracted position along the arcuate path.

In one embodiment, there is provided an actuation system for deploying and retracting a lift assisting device of a leading edge of a wing of an aircraft including a track pivotally coupled to the lift assisting device. The track has first and second outer surfaces and side surfaces. The actuation system includes a shaft rotationally coupled within the wing of the aircraft and operable, in response to flight control signals, to deploy or retract the lift assisting device. The actuation system includes an actuator for actuating the lift assisting device, coupled to the shaft, between a retracted position to a deployed position along an arcuate path. The actuation system includes a plurality of track roller bearings rotatably contacting the first and second outer surfaces of the track to guide the track along the arcuate path. The plurality of track roller bearings includes one or more lined track roller assembly.

### BRIEF DESCRIPTION OF THE DRAWINGS

FIG. 1 is a plan view of a wing of an aircraft illustrating a plurality of slat panels located at a leading edge of the wing;
FIG. 2 is a side cross-sectional view of the wing of FIG. 1 taken along line 2-2 illustrating one of the slat panels in a deployed and a retracted position;
FIG. 3 is a front, partial cross-sectional view of a portion of the wing illustrating an actuation system for a slat panel, in accordance with one embodiment of the present invention;
FIG. 4 is a cross-sectional view of a split type track roller bearing in accordance with one embodiment of the present invention;
FIG. 5 is a front, partial cross-sectional view of a portion of the wing illustrating side guide roller bearings in accordance with one embodiment of the present invention;
FIG. 6A is a front, partial cross-sectional view of a portion of the wing illustrating an actuation system for a slat panel, having lined track roller assemblies;
FIG. 6B is an enlarged view of one embodiment of the lined track roller of the present invention;
FIG. 6C is an enlarged view of another embodiment of the lined track roller of the present invention;
FIG. 6D is an enlarged view of another embodiment of the lined track roller of the present invention;
FIG. 7 is a cross-sectional view of a track roller bearing in accordance with one embodiment of the present invention;
FIG. 8 is a plan view of a wing of an aircraft illustrating a plurality of slat panels located at a leading edge of the wing and having lined track roller bearings assemblies; and
FIG. 9 is a front, partial cross-sectional view of a portion of the wing illustrating lined side guide roller bearings in accordance with one embodiment of the present invention.

### DETAILED DESCRIPTION OF PREFERRED EMBODIMENTS OF THE INVENTION

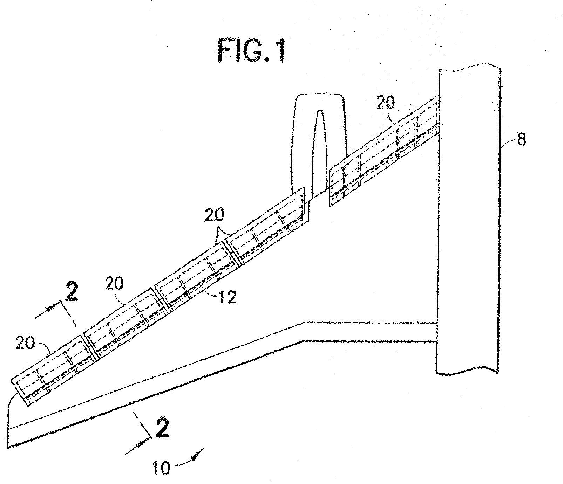

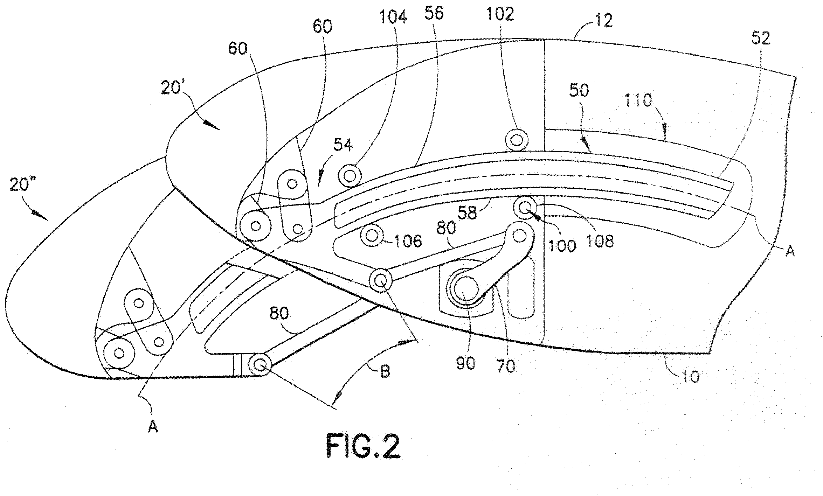

FIG. 1 provides a plan view of a leading edge section 12 of a wing 10 of an aircraft 8. The wing 10 includes a plurality of slat panels 20 deployed along the leading edge 12 of the wing 10. As described herein, an actuation system selectively extends and retracts the slat panels 20 relative to the leading edge 12 in response to flight control signals, as is generally known in the art. FIG. 2 is a partial cross-sectional view of the wing 10 taken along line 2-2 of FIG. 1 and illustrates one of the leading edge slats 20 in a retracted position 20' and in an extended position 20". As shown in FIG. 2, in the retracted position (e.g., flight position) the slat 20' is located against the leading edge 12 of the wing 10 and in the deployed position (e.g., take-off and landing position) the slat 20" is deployed downwardly and forwardly away from the leading edge portion 12 of the wing 10 thus increasing a surface area of the wing 10 to vary the wing's lift-enhancing characteristics.

An actuation system 40 of each slat 20 includes a track 50 extending along an arcuate axis A from a rear portion 52 to a forward portion 54. It should be appreciated that the track 50 may have multiple configurations such as, for example, an I-beam shape and a PI-beam shape. Generally speaking, webbing that constitutes support elements of the track is not overly robust. As such, multiple load conditions are experienced at the track during operation that may be carried and distributed by roller style bearings, as are described herein, to, for example, the wing structure of the aircraft.

As shown in FIG. 2, the forward portion 54 of the track 50 is pivotally coupled to an interior surface of the slat 20. In one embodiment, the track 50 is coupled to the slat 20 by means of, for example, linkage bearings 60. The actuation system 40 also includes an actuator lever 70. The actuator lever 70 is coupled to the track 50 via an actuator arm 80. The actuator lever 70 is also coupled to a shaft 90. As is generally known in the art, the shaft 90 extends along the leading edge section 12 of the wing 10 and operates a plurality of actuator levers (similar to lever 70) coupled to respective ones of the plurality of slat panels 20 in response to flight control commands to extend the slats when rotating in a first direction and to retract the slats 20 when rotating in a second direction.

A plurality of track roller bearings 100 are disposed about a first outer surface 56 and a second outer surface 58 of the track 50. The track roller bearings 100 are in rotational contact with the outer surfaces 56 and 58 of the track 50 to guide the track 50 in its arcuate path along axis A during deployment and retraction. The path of travel of the slat 20 is illustrated in FIG. 2 by arrow B. As shown in FIG. 2, the plurality of track roller bearings 100 includes a first pair of track roller bearings 102 and 104 and a second pair of track roller bearings 106 and 108. It should be appreciated that it is within the scope of the present invention to include more or less than the illustrated two pairs of roller bearings. For example, three roller bearings may be disposed about one or both of the first outer surface 56 and/or second outer surface 58 of the track 50. As described in detail below, it is also within the scope of the present invention for the plurality of track roller bearings 100 to include rolling element needle style track rollers or self lubricating style track rollers. In one embodiment, a mounting web 110 encloses at least a portion of the track 50. In one embodiment, the mounting web 110 extends into a fuel tank disposed within the wing of the aircraft.

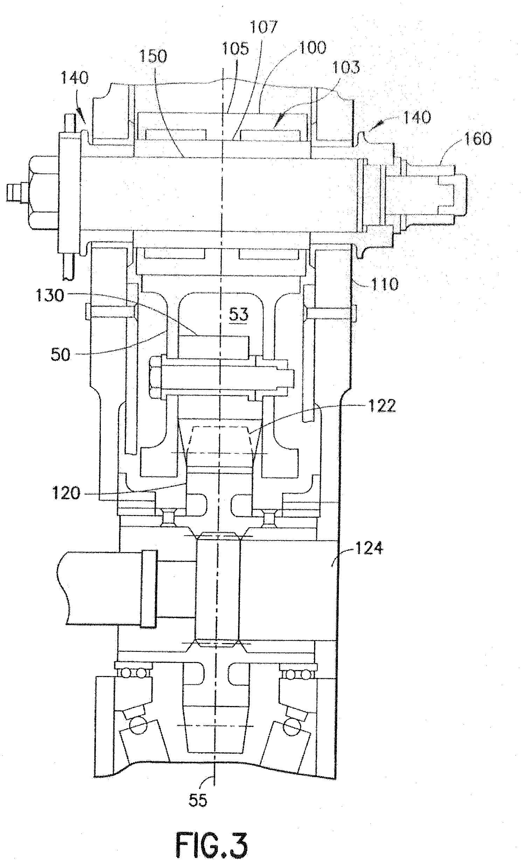

In one embodiment illustrated in FIG. 3, the actuation system 40 includes a pinion gear 120 having teeth 122 that drive a gear track 130 disposed within an interior portion 53 of the track 50. Preferably, the gear track 130 is positioned on a vertical centerline 55 of the track 50. The pinion gear 120 is coupled to a shaft 124 (such as the shaft 90) that rotates in response to flight control commands. As the shaft 124 and the pinion gear 120 rotate, a drive force is provided to the gear track 130 for driving the track 50 along axis A between one of the retracted position 20' and the extended position 20" (FIG. 2). As shown in FIG. 3, the track roller bearing 100 is coupled to the mounting web 110 about the track 50. For example, as shown in FIG. 3, the track roller bearing 100 is coupled to the mounting web 110 above the track 50.

As shown in FIG. 2, the plurality of track roller bearings 100 are coupled to the mounting web 110 about the first and second outer surfaces 56 and 58 of the track 50 to support and guide the track 50 during deployment and retraction. In one embodiment, illustrated in FIG. 3, the track roller 100 is coupled to the mounting web 110 using opposing bushings 140, a mounting pin 150 and a nut 160. In one embodiment, the opposing bushings 140 are comprised of eccentric bushings and the nut 160 is comprised of a castellated nut to allow adjustment to the track 50 at fit-up. As shown in FIG. 3, the track roller bearing 100 includes a plurality of needle roller elements 103 (e.g., two rows of needle rollers in a double channel design). The needle roller elements 103 are lubricated with grease such as, for example, Aeroshell 33, Mobil 28, Aerospec 200 or Aeroplex 444 as is required by predetermined maintenance procedures. In one embodiment, an outer ring 105, an inner ring and 107 and needle rollers 103 of the track roller bearings 100 are comprised of hardened stainless steel such as, for example, 440C, 52100, 422 stainless with a special nitriding process (AeroCres®)(AEROCRES is registered trademark of RBC Aircraft Products, Inc., Oxford, Connecticut USA), XD-15NW, and Cronidur 30.

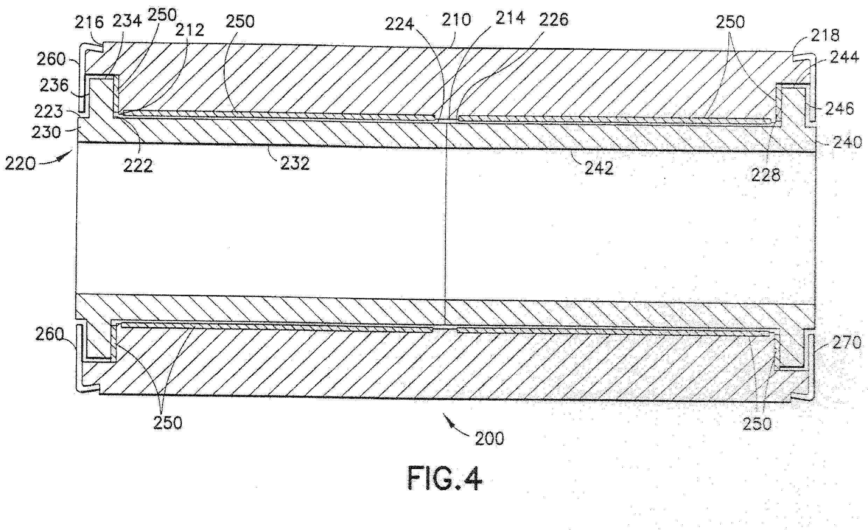

In another not claimed embodiment, illustrated in FIG. 4, the track roller bearing 100 is comprised of a lined track roller assembly 200 including an outer ring 210 and an inner ring 220. The inner ring 220 is a split ring including a first portion 230 and a second portion 240. The first portion 230 and the second portion 240 include respective body portions 232 and 242 as well as head portions 234 and 244. The head portions 234 and 244 include flanges 236 and 246, respectively. The split ring configuration of the first portion 230 and the second portion 240 due to their ability to deflect relative to one another, accommodate potential deflection and/or bending of the mounting pin 150 from stresses that may be encountered during, for example, aircraft takeoff and landing. As can be appreciated, unless accounted for a bending of the mounting pin 150 may result in high friction or binding of the track roller 100 or 200 and a failure to deploy or retract slats in response to flight control commands. The flanges 236 and 246 control axial motion of the outer ring 210 to substantially eliminate contact of the outer ring 210 and the opposing bushings 140 utilized to mount the track roller 100 and 200 within the mounting web 110.

As shown in FIG. 4, the lined track roller assembly 200 may also include liners 250 disposed between bearing surfaces 212, 214 of the outer ring 210 and bearing surfaces 222, 224, 226 and 228 of the inner ring 220. In one embodiment, the liners 250 are constructed of polytetrafluoroethylene (commercially available under the designation TEFLON®)(TEFLON is a registered trademark of E.I. DuPont De Nemours and Company, Wilmington, Delaware USA), polyester, graphite, fabric impregnated with a polymer, urethane, polyimide, epoxy, phenolic or other type of resin. In one embodiment, the liners 250 are molded and are comprised of polytetrafluoroethylene (TEFLON®), polyester, graphite, fibers in a thermosetting composite resin made from polyester, urethane, polyimide, epoxy, phenolic or other type of resin. In one embodiment, the outer ring 210 and the inner ring 220 is comprised of hardened stainless steel such as, for example, 440C, 52100, Custom 455®, Custom 465® (CUSTOM 455 and CUSTOM 465 are registered trademarks of CRS Holdings, Inc., Wilmington, Delaware, USA), and corrosion resistance steel such as 17-4PH, 15-5PH and PH13-8Mo.

In one embodiment, the lined track roller assembly 200 also includes shields 260 and 270 disposed about shoulder portions 216 and 218 of an outer diameter of the outer ring 210 and extending to an outer diameter 223 of the inner ring 220. The inventors have discovered that the shields 260 and 270 reduce friction and discourage dust and other contaminates from entering and compromising contact between the bearing surfaces 212, 214 of the outer ring 210 and bearing surfaces 222, 224, 226 and 228 of the inner ring 220.

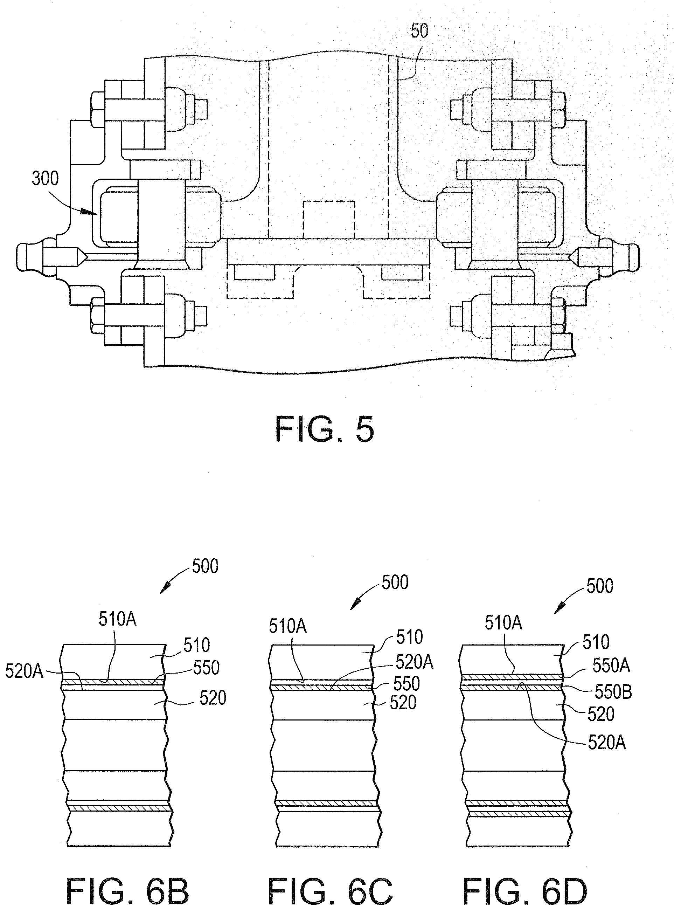

In one embodiment, illustrated in FIG. 5, a plurality of side guide roller bearings 300 are disposed about opposing sides of the track 50. The side guide roller bearings 300 are in rotational contact with the opposing side surfaces of the track 50 to guide the track 50, along with track roller bearings 100 and 200, in its arcuate path along axis A during deployment and retraction. In one embodiment, the plurality of side guide roller bearings 300 are in rotational contact with wear pads affixed to the track 50. In one embodiment, the plurality of side guide roller bearings 300 include needle roller bearings having outer races, inner races and needle rollers constructed of hardened stainless steel such as, for example, 440C, 52100, 422 stainless with a special nitriding process (e.g., the aforementioned AeroCres® process), XD-15NW, and Cronidur 30. In yet another embodiment, the side guide roller bearings 300 include end washers and seals. The end washers are constructed of, for example, 52100 steel with cadmium plate or 420 stainless steel. The seals are made from a thermoplastic such as, for example, an acetal copolymer with lubricant fillers or Delrin®/Celcon® (DELRIN is a registered trademark of E.I. DuPont De Nemours and Company, Wilmington, Delaware USA, and CELRON is a registered trademark of CNA Holdings, Inc., Summit, New Jersey USA). The seals retain grease and prevent of ingress dirt, dust and other contaminates into the bearings 300. In one embodiment, needle roller elements of the bearings 300 are lubricated with grease such as, for example, Aeroshell 33, Mobil 28, Aerospec 200 or Aeroplex 444 as is required by predetermined maintenance procedures.

As described above, both the rolling element track bearings 100 and self lubricating track roller bearings 200 include a hard outer ring or race to work in harmony with the mating track 50 that the bearings roll against. In one embodiment, the track 50 is comprised of titanium or steel. In one embodiment, the track 50 may be coated with a material such as, for example, tungsten carbide, although a coating is not a requirement of the present invention.

In addition to a unique bearing mounting configuration, another aspect of the present invention is related to the materials from which the bearings are manufactured. Historically, lined track bearings are manufactured from relatively soft materials. For example, inner rings are typically comprised of precipitation-hardening martensitic stainless steel such as, for example, 17-4PH steel, having a Rockwell hardness in a range of about HRc 30s to about HRc 40s, while outer rings are typically comprised of precipitation-hardening stainless steel such as, for example, custom 455 steel, having a Rockwell hardness in the range of about HRc 40s. Outer rings may also be manufactured as through hardened high strength steel having a Rockwell hardness of in the range of about HRc 50s to avoid flats that can occur. 440C steel has also been used for outer rings. The inventors have discovered that, in certain applications, it is beneficial to maintain inner rings manufactured from 17-4PH steel, and that it is desirable to manufacture outer rings of AISI Type 422 stainless steel. In one embodiment, each of the outer rings is comprised of AISI Type 422 stainless steel with a special nitriding hardening process (e.g., the aforementioned AeroCres® process). Outer rings comprised of AISI Type 422 stainless steel with AeroCres® hardening are preferred for superior corrosion resistance and performance as compared to conventional outer rings manufactured of 440C steel.

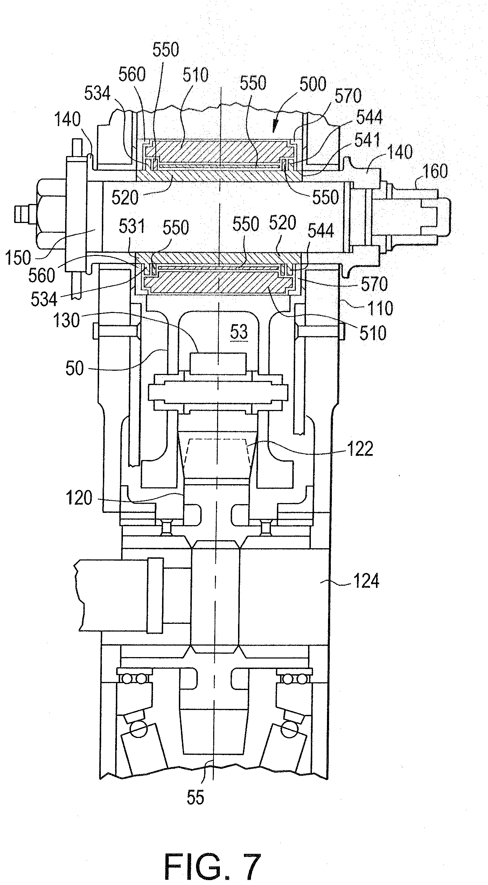

According to the invention, the lined track roller bearing 500 is similar to the track roller bearing of FIG. 4, thus like elements have been assigned similar element numbers with the first numeral 2 being replaced with the numeral 5. The lined track roller bearing 500 is a lined track roller assembly 500 including an outer ring 510 and an inner ring 520. The inner ring 520 is disposed at least partially in the outer ring 510. The outer ring 510 defines an inner bearing surface 510A and the inner ring 520 defines an outer bearing surface 520A. The inner ring 520 extends continuously from a first end 531 to a second end 541. Thus the lined track roller bearing 500 has no split and no separate first portion 230 and second portion 240, as shown in FIG. 4. The inner ring 520 defines a continuous body portion 542 as well as head portions 534 and 544 proximate the first end 531 and the second end 541, respectively. The head portions 534 and 544 include flanges 536 and 546, respectively. The flanges 536 and 546 control axial motion of the outer ring 510 to substantially eliminate contact of the outer ring 510 with the opposing bushings 540 utilized to mount the track roller 500 within the mounting web 310, illustrated in FIG. 7. While the lined track rollers 500 are shown and described as having no split and no separate first portion 230 and second portion 240, the present invention is not limited in this regard, as the lined track rollers 500 having a split configuration as shown in FIG. 4 may also be employed without departing from the broader aspects defined herein.

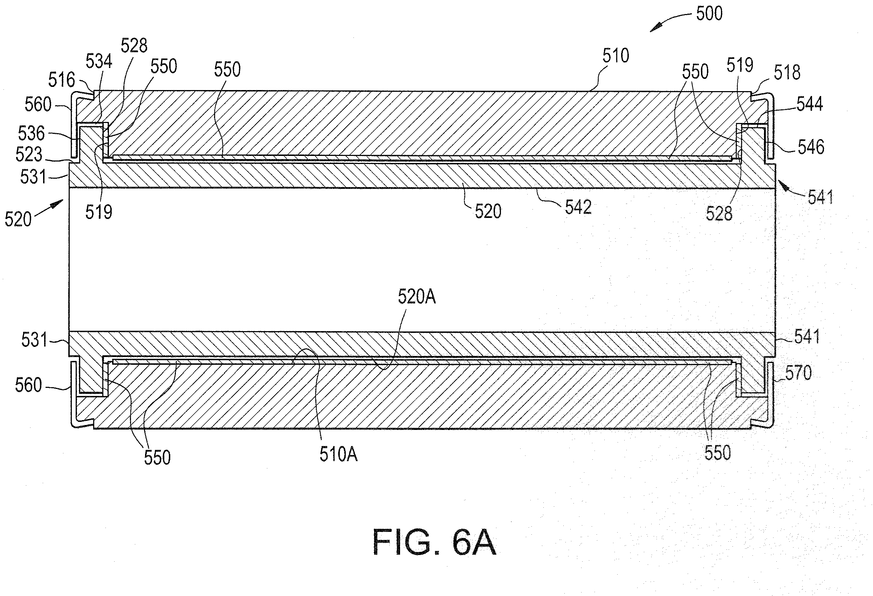

As shown in FIGS. 6A and 6B, the lined track roller assembly 500 includes liners 550 disposed between the outer ring 510 the inner ring 520. As shown in FIGS. 6A and 6B, the liner 550 is disposed on, for example, secured to (e.g., by an adhesive or by bonding) the inner bearing surface 510A of the outer ring 510 and the liner 550 slidingly engages the outer bearing surface 520 of the inner ring 520. A liner 550 is also disposed between an inside facing lateral surface 528 of the each of the head portions 534 and 544 and an outwardly facing lateral surface 519 of the outer ring 510. The lined track roller assembly 500 also includes shields 560 and 570 disposed about shoulder portions 516 and 518 of an outer diameter of the outer ring 510 and extending to an outer diameter 523 of the inner ring 520. The liners 550 are manufactured from materials similar or identical to those described above for the liners 250. While the liner 550 is shown in FIGS. 6A and 6B and described as being disposed on the inner bearing surface 510A, the present invention is not limited in this regard as the liner 550 may be disposed on the outer bearing surface 520A of the inner ring 520 and the liner 550 slidingly engages the inner bearing surface 510A of the outer ring 510, as shown in FIG. 6C. In another embodiment, as shown in FIG. 6D, a liner 550A, similar to the liner 550, is disposed the inner bearing surface 510A of the outer ring 510 and a liner 550B, similar to the liner 550, is disposed in the outer bearing surface 520A of the inner ring 520, as shown in FIG. 6D, wherein the liners 550A and 550B slidingly engage one another.

The mounting web 510 of FIG. 7 is similar to the mounting web of FIG. 3; therefore like elements for the track roller bearing 500 have been assigned similar element numbers with the first numeral 2 being replaced with the numeral 5. As shown in FIG. 7, the track roller bearing 500 is coupled to the mounting web 110 above the track 50. With reference to FIG. 1, one or more of the track roller bearings 102, 104, 106 and 106 are lined track rollers 500 as illustrated in FIG. 5. The lined track roller 500 is coupled to the mounting web 110 using opposing bushings 140, a mounting pin 150 and a nut 160.

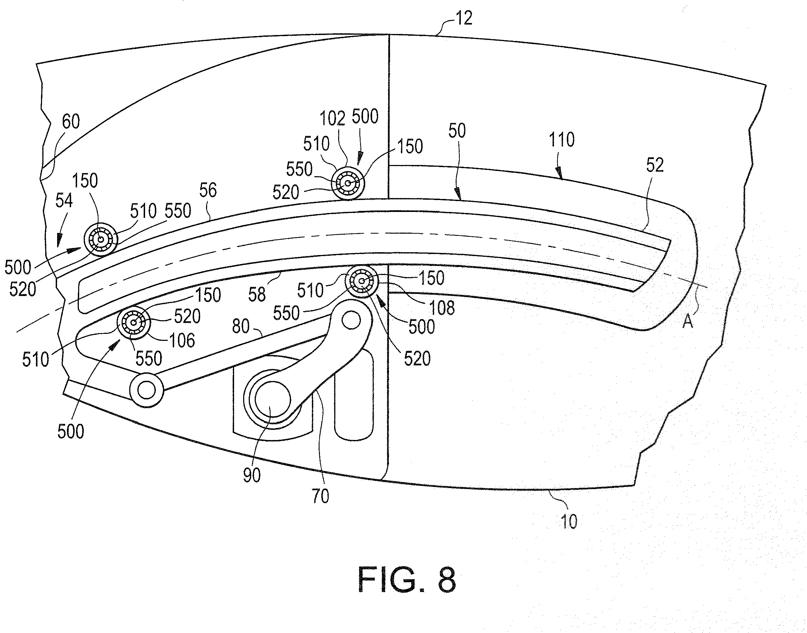

Referring to FIG. 8, in one embodiment, all of the track roller bearings 102, 104, 106 and 108 are lined track rollers 500 similar to those as illustrated in detail in FIG. 6A, 6B, 6c and/or 6D.

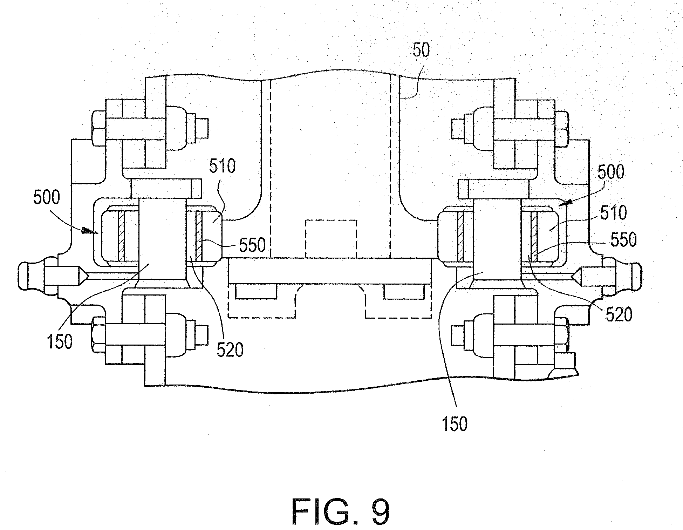

Referring to FIG. 9, the plurality of side guide roller bearings 500 are disposed about opposing sides of the track 50 in a manner similar to that described above with reference to the side guide track roller 300 of FIG. 5. However, one or more of the side guide roller bearings 500 are lined roller bearings similar to the lined track roller bearings 500 shown in FIGS. 6A, 6B, 6C, and/or 6D. In one embodiment, all of the side guide roller bearings 500 are lined roller bearings similar to the lined track roller bearings 500.

Surprisingly, use of the lined track rollers 500 in the actuation system of leading edge flaps on an aircraft has benefit over bearings having needle rollers. Actuation systems are limited as to how much force they can apply. Since lined track rollers have a higher friction coefficient than needle roller track rollers, one skilled in the art of bearing design for aircraft applications would be discouraged from using a system that includes lined track rollers as it will take more force to actuate the system. However, one surprising benefit of lined track rollers is to move away from track rollers that require grease. By moving away from rollers that require grease, heavy hydraulic greasing systems do not have to be included on the aircraft and this benefit of reduced weight and complexity has been discovered overcome the determinant of higher friction compared to the lower friction needle rollers.

Although the invention has been described with reference to particular embodiments thereof, it will be understood by one of ordinary skill in the art, upon a reading and understanding of the foregoing disclosure that numerous variations and alterations to the disclosed embodiments will fall within the scope of this invention and of the appended claims.

## Claims

1. A wing (10) for an aircraft, comprising a lift assisting device of a leading edge (12) of said wing and an actuation system (40) for deploying and retracting said lift assisting device, the actuation system (40) comprising:
a track (50) pivotally coupled to the lift assisting device, the track (50) having first (56) and second (58) outer surfaces and side surfaces;
a shaft (90, 124) rotationally coupled within the wing (10) of the aircraft and operable, in response to flight control signals, to deploy or retract the lift assisting device;
means for actuating the lift assisting device, coupled to the shaft (124), between a retracted position to a deployed position along an arcuate path;
a plurality of track roller bearings (100, 102, 104, 106, 108, 200, 500) rotatably contacting the first (56) and second (58) outer surfaces of the track (50) to guide the track along the arcuate path; and
the plurality of track roller bearings (100, 102, 104, 106, 108, 200, 500) including at least one lined track roller assembly (500);
each of the at least one lined track roller assemblies (500) comprises an inner ring (520) having an outer bearing surface (520A) and an outer ring (510) having an inner (510A) bearing surface the inner ring (520) being disposed at least partially in the outer ring (510), **characterized in that** the inner ring (520) has a continuous body portion (542) that extends continuously from a first end (531) to a second end (541) of the inner ring (520) and a self-lubricating liner (550) is disposed on at least one of the outer bearing surface (520A) and the inner bearing surface (510A).

2. The wing (10) of claim 1, wherein the plurality of track roller bearings (100, 102, 104, 106, 108, 200, 500) includes at least one track roller assembly in rotational contact with an upper surface of the track (50) and at least one track roller assembly in rotational contact with a lower surface of the track (50).

3. The wing (10) of claim 1, wherein the all of the plurality of track roller bearings (500) are the lined track roller assembly (500).

4. The wing (10) of claim 1, wherein the means for actuating is comprised of:
an actuator arm (80) coupled to the track (50); and
an actuator lever (70) coupled to the shaft (90, 124) and to the actuator arm (80);
wherein when the shaft (90, 124) rotates in a first direction the actuator lever (70) drives the actuator arm (80) to move the track (50) and the lift assisting device from the retracted to the deployed position along the arcuate path, and when the shaft (90, 124) rotates in a second direction the actuator lever (20) drives the actuator arm to move the track (50) and the lift assisting device from the deployed position to the retracted position along the arcuate path.

5. The wing (10) of claim 1, wherein the actuation system (40) further includes a mounting web (110) enclosing at least a portion of the track (50) and wherein the plurality of track roller bearings (100, 102, 104, 106, 108, 200, 500) are coupled to the mounting web (110).

6. The wing (10) of claim 5, wherein the track roller bearings (100, 102, 104, 106, 108, 200, 500) are coupled to the mounting web (110) with opposing bushings (140), a mounting pin (150) and a nut (160).

7. The wing (10) of claim 6, wherein the opposing bushings (140) are comprised of eccentric bushings and the nut (160) is comprised of a castellated nut to allow adjustment to the track at fit-up.

8. The wing (10) of claim 1 comprising a plurality of side roller bearings (300) rotatably contacting at least one side of the track to guide the track along the arcuate path.

9. The wing (10) of claim 8 wherein at least one of the side roller bearings (300) is a lined track roller assembly (500).

## Patentansprüche

1. Flügel (10) für ein Flugzeug, umfassend eine Aufzugsunterstützungsvorrichtung einer Vorderkante (12) des Flügels und ein Betätigungssystem (40) zum Ausfahren und Einziehen der Aufzugsunterstützungsvorrichtung, wobei das Betätigungssystem (40) Folgendes umfasst:
eine Laufrille (50), die schwenkbar an die Aufzugsunterstützungsvorrichtung gekoppelt ist, wobei die Laufrille (50) erste (56) und zweite (58) Außenflächen und Seitenflächen aufweist;
eine Welle (90, 124), die drehend innerhalb des Flügels (10) des Flugzeuges gekoppelt ist und dazu betätigbar ist als Reaktion auf Flugsteuerungssignale die Aufzugsunterstützungsvorrichtung auszufahren oder einzuziehen;
Mittel zum Betätigen der Aufzugsunterstützungsvorrichtung, gekoppelt an die Welle (124), aus einer eingezogenen Stellung in eine ausgefahrene Stellung entlang einem bogenförmigen Weg;
eine Mehrzahl von Laufrollenlagern (100, 102, 104, 106, 108, 200, 500), die drehbar die ersten (56) und zweiten (58) Außenflächen der Laufrille (50) berühren, um die Laufrille entlang dem bogenförmigen Weg zu führen; und
wobei die Mehrzahl von Laufrollenlagern (100, 102, 104, 106, 108, 200, 500) mindestens eine ausgekleidete Laufrollenanordnung (500) einschließt;
wobei jede der mindestens einen ausgekleideten Laufrollenanordnungen (500) einen Innenring (520) mit einer äußeren Lagerfläche (520A) und einen Außenring (510) mit einer inneren Lagerfläche (510A) umfasst, wobei der Innenring (520) zumindest teilweise in dem Außenring (510) angeordnet ist, **dadurch gekennzeichnet, dass** der Innenring (520) einen durchgehenden Körperabschnitt (542) aufweist, der sich durchgehend von einem ersten Ende (531) zu einem zweiten Ende (541) des Innenringes (520) erstreckt, und eine selbstschmierende Auskleidung (550) auf mindestens einer aus der äußeren Lagerfläche (520A) und der inneren Lagerfläche (510A) angeordnet ist.

2. Flügel (10) nach Anspruch 1, wobei die Mehrzahl von Laufrollenlagern (100, 102, 104, 106, 108, 200, 500) mindestens eine Laufrollenanordnung in drehendem Kontakt mit einer Oberseite der Laufrille (50) und mindestens eine Laufrollenanordnung in drehendem Kontakt mit einer Unterseite der Laufrille (50) einschließt.

3. Flügel (10) nach Anspruch 1, wobei alle der Mehrzahl von Laufrollenlagern (500) die ausgekleidete Laufrollenanordnung (500) sind.

4. Flügel (10) nach Anspruch 1, wobei das Mittel zum Betätigen Folgen umfasst:
einen Betätigungsarm (80), der an die Laufrille (50) gekoppelt ist; und
einen Betätigungshebel (70), der an die Welle (90, 124) und an den Betätigungsarm (80) gekoppelt ist;
wobei, wenn sich die Welle (90, 124) in eine erste Richtung dreht, der Betätigungshebel (70) den Betätigungsarm (80) so antreibt, dass dieser die Laufrille (50) und die Aufzugsunterstützungsvorrichtung entlang dem bogenförmigen Weg aus der eingezogenen in die ausgefahrene Stellung bewegt, und, wenn sich die Welle (90, 124) in eine zweite Richtung dreht, der Betätigungshebel (20) den Betätigungsarm so antreibt, dass dieser die Laufrille (50) und die Aufzugsunterstützungsvorrichtung entlang dem bogenförmigen Weg aus der ausgefahrenen Stellung in die eingezogene Stellung bewegt.

5. Flügel (10) nach Anspruch 1, wobei das Betätigungssystem (40) ferner einen Montagesteg (110) einschließt, der zumindest einen Abschnitt der Laufrille (50) umschließt, und wobei die Mehrzahl von Laufrollenlagern (100, 102, 104, 106, 108, 200, 500) an den Montagesteg (110) gekoppelt ist.

6. Flügel (10) nach Anspruch 5, wobei die Laufrollenlager (100, 102, 104, 106, 108, 200, 500) mit gegenüberliegenden Buchsen (140), einem Montagestift (150) und einer Mutter (160) an den Montagesteg (110) gekoppelt sind.

7. Flügel (10) nach Anspruch 6, wobei die gegenüberliegenden Buchsen (140) exzentrische Buchsen umfassen und die Mutter (160) eine Kronenmutter umfasst, um eine Anpassung an die Laufrille beim Einpassen zu ermöglichen.

8. Flügel (10) nach Anspruch 1, umfassend eine Mehrzahl von Seitenrollenlagern (300), die drehbar mindestens eine Seite der Laufrille berühren, um die Laufrille entlang dem bogenförmigen Weg zu führen.

9. Flügel (10) nach Anspruch 8, wobei mindestens eines der Seitenrollenlager (300) eine ausgekleidete Laufrollenanordnung (500) ist.

## Revendications

1. Aile (10) pour un aéronef, comprenant un dispositif d'assistance au soulèvement d'un bord d'attaque (12) de ladite aile et un système d'actionnement (40) destiné à déployer et à rétracter ledit dispositif d'assistance au soulèvement, le système d'actionnement (40) comprenant :
un chemin de roulement (50) couplé de manière pivotante au dispositif d'assistance au soulèvement, le chemin de roulement (50) ayant des première (56) et seconde (58) surfaces extérieures et des surfaces latérales ;
un arbre (90, 124) couplé en rotation à l'intérieur de l'aile (10) de l'aéronef et pouvant fonctionner, en réponse à des signaux de commande de vol, pour déployer ou rétracter le dispositif d'assistance au soulèvement ;
des moyens pour actionner le dispositif d'assistance au soulèvement, couplés à l'arbre (124), entre une position rétractée et une position déployée le long d'un trajet en arc de cercle ;
une pluralité de paliers à galets de roulement (100, 102, 104, 106, 108, 200, 500) venant en contact de manière rotative avec les première (56) et seconde (58) surfaces extérieures du chemin de roulement (50) pour guider le chemin de roulement le long du trajet en arc de cercle ; et
la pluralité de paliers à galets de roulement (100, 102, 104, 106, 108, 200, 500) comprenant au moins un ensemble de galets de roulement alignés (500) ;
chacun du au moins un ensemble de galets de roulement alignés (500) comprend une bague intérieure (520) ayant une surface d'appui externe (520A) et une bague extérieure (510) ayant une surface d'appui interne (510A), la bague intérieure (520) étant disposée au moins partiellement dans la bague extérieure (510), **caractérisée en ce que** la bague intérieure (520) présente une partie de corps continue (542) qui s'étend de manière continue d'une première extrémité (531) à une seconde extrémité (541) de la bague intérieure (520) et une garniture autolubrifiante (550) est disposée sur au moins l'une de la surface d'appui externe (520A) et de la surface d'appui interne (510A).

2. Aile (10) selon la revendication 1, dans laquelle la pluralité de paliers à galets de roulement (100, 102, 104, 106, 108, 200, 500) comprend au moins un ensemble de galets de roulement en contact rotatif avec une surface supérieure du chemin de roulement (50) et au moins un ensemble de galets de roulement en contact rotatif avec une surface inférieure du chemin de roulement (50).

3. Aile (10) selon la revendication 1, dans laquelle la totalité de la pluralité de paliers à galets de roulement (500) est l'ensemble de galets de roulement alignés (500).

4. Aile (10) selon la revendication 1, dans laquelle les moyens d'actionnement sont constitués :
d'un bras d'actionneur (80) couplé au chemin de roulement (50) ; et
d'un levier d'actionneur (70) couplé à l'arbre (90, 124) et au bras d'actionneur (80) ;
dans lequel, lorsque l'arbre (90, 124) tourne dans une première direction, le levier d'actionneur (70) entraîne le bras d'actionneur (80) pour déplacer le chemin de roulement (50) et le dispositif d'assistance au soulèvement de la position rétractée à la position déployée le long du trajet en arc de cercle et, lorsque l'arbre (90, 124) tourne dans une seconde direction, le levier d'actionneur (20) entraîne le bras d'actionneur pour déplacer le chemin de roulement (50) et le dispositif d'assistance au soulèvement de la position déployée à la position rétractée le long du trajet en arc de cercle.

5. Aile (10) selon la revendication 1, dans laquelle le système d'actionnement (40) comprend en outre une bande de montage (110) renfermant au moins une partie du chemin de roulement (50) et dans laquelle la pluralité de paliers à galets de roulement (100, 102, 104, 106, 108, 200, 500) sont couplés à la bande de montage (110).

6. Aile (10) selon la revendication 5, dans laquelle les paliers à galets de roulement (100, 102, 104, 106, 108, 200, 500) sont couplés à la bande de montage (110) avec des douilles opposées (140), une broche de montage (150) et un écrou (160).

7. Aile (10) selon la revendication 6, dans laquelle les douilles opposées (140) sont constituées de douilles excentriques et l'écrou (160) est constitué d'un écrou crénelé pour permettre un ajustement du chemin de roulement lors de l'agencement.

8. Aile (10) selon la revendication 1, comprenant une pluralité de paliers à galets latéraux (300) venant en contact rotatif avec au moins un côté du chemin de roulement pour guider le chemin de roulement le long du trajet en arc de cercle.

9. Aile (10) selon la revendication 8, dans laquelle au moins l'un des paliers à galets latéraux (300) est un ensemble de galets de roulement alignés (500).
